# EUROPEAN PATENT APPLICATION

(11) **EP 4 485 630 A1**
(43) Date of publication of application: **01.01.2025**
(21) Application number: 22962407.7
(22) Date of filing: 20.10.2022
(51) Int. Cl.: H01M 50/103, H01M 50/244

(54) **BATTERY CELL, BATTERY, ELECTRIC DEVICE, AND METHOD FOR COVERING BATTERY CELL WITH INSULATING FILM**

(71) Applicant: Contemporary Amperex Technology Co., Limited, Ningde, Fujian 352100 (CN)
(72) Inventor: CHEN, Lianfu, Ningde, Fujian 352100 (CN); DING, Xiaobo, Ningde, Fujian 352100 (CN); FAN, Donghua, Ningde, Fujian 352100 (CN)
(74) Representative: Ziebig Hengelhaupt Intellectual Property Attorneys Patentanwaltskanzlei PartGmbB
(86) International application number: PCT/CN2022/126474
(87) International publication number: WO 2024/082220

(57) **Abstract**

Embodiments of the present application provides a battery cell, a battery, an electrical device and a method for wrapping around a battery cell with an insulating film. The battery cell includes: an electrode assembly; a housing having an opening configured to accommodate the electrode assembly, where a first wall of the housing is provided with a pressure relief mechanism; an end cover configured to cover the opening; and an insulating film for wrapping around at least the first wall. The insulating film is provided with a weak region corresponding to the pressure relief mechanism. By providing the insulating film with a weak region corresponding to the pressure relief mechanism, due to the low toughness of the weak region, the influence of the insulating film on the actuation of the pressure relief mechanism can be reduced, and the safety of the battery cell can be improved.

## Description

### Technical Field

The present application relates to the technical field of batteries, and in particular, to a battery cell, a battery, an electrical device and a method for wrapping around a battery cell with an insulating film.

### Background

With the increasing environmental pollution, the new energy industry has attracted more and more attention. In the new energy industry, battery technology is an important factor related to its development.

Moreover, with the continuous development of the battery technology, higher and higher requirements are placed on the safety performance of batteries. For example, in order to protect a battery, a battery cell is usually covered with an insulating film. However, due to the high toughness, the insulating film affects the release of internal pressure of the battery cell, thereby reducing the safety of the battery.

### Summary of the Invention

In view of the above problems, the present application provides a battery cell, a battery, an electrical device and a method for wrapping around a battery cell with an insulating film, which can reduce the influence of the insulating film on the actuation of a pressure relief mechanism.

In a first aspect, the present application provides a battery cell, including: an electrode assembly; a housing having an opening configured to accommodate the electrode assembly, wherein a first wall of the housing is provided with a pressure relief mechanism; an end cover configured to cover the opening; and an insulating film for wrapping around at least the first wall; wherein the insulating film is provided with a weak region corresponding to the pressure relief mechanism.

By providing the insulating film with a weak region corresponding to the pressure relief mechanism, due to the low toughness of the weak region, the influence of the insulating film on the actuation of the pressure relief mechanism can be reduced, and the safety of the battery cell can be improved.

In some embodiments, an indentation is provided in the weak region.

By providing the insulating film with an indentation, the toughness of the weak region can be reduced simply and effectively, thereby reducing the influence of the insulating film on the actuation of the pressure relief mechanism, and improving the safety of the battery cell.

In some embodiments, a protective layer is provided on a side of the pressure relief mechanism facing away from the interior of the battery cell, an orthographic projection of the protective layer onto the first wall covers the pressure relief mechanism, the insulating film wraps around a side of the protective layer facing away from the pressure relief mechanism, and an orthographic projection of the indentation onto the first wall is covered by the orthographic projection of the protective layer onto the first wall.

Since the protective layer can prevent the pressure relief mechanism from being damaged when it is not actuated, when the orthographic projection of the indentation onto the first wall is covered by the orthographic projection of the protective layer onto the first wall, the influence of the rupture of the insulating film on the battery cell can be reduced when the pressure relief mechanism is not actuated, thereby improving the safety of the battery cell.

In some embodiments, the orthographic projection of the indentation onto the first wall is located between a first edge and a second edge, wherein the first edge is an edge of the pressure relief mechanism; and the second edge is an edge of the orthographic projection of the protective layer on the first wall.

Since the orthographic projection of the indentation onto the first wall is located between the first edge and the second edge, the influence of the rupture of the insulating film on the pressure relief mechanism can be prevented more effectively when the pressure relief mechanism is not actuated, further improving the safety of the battery cell.

Moreover, when the indentation in the weak region is provided after the insulating film wraps around the first wall of the housing, it is also possible to prevent damage to the pressure relief mechanism when providing the indentation, reduce the scrap rate of battery cells, and reduce the production cost.

In some embodiments, a distance from the orthographic projection of the indentation onto the first wall to the first edge is less than a distance from the orthographic projection of the indentation onto the first wall to the second edge.

Since the distance from the orthographic projection of the indentation onto the first wall to the first edge is less than the distance from the orthographic projection of the indentation onto the first wall to the second edge, the indentation is closer to the pressure relief mechanism. Therefore, when the pressure relief mechanism is actuated, the insulating film near the indentation is broken quickly, so that it is possible to prevent the influence of the rupture of the insulating film on the battery cell when the pressure relief mechanism is not actuated, and further reduce the influence of the insulating film on the actuation of the pressure relief mechanism.

In some embodiments, the distance from the orthographic projection of the indentation onto the first wall to the first edge is 3 mm to 5 mm.

The smaller the distance from the orthographic projection of the indentation onto the first wall to the first edge, the faster the rupture speed of the insulating film when the pressure relief mechanism is actuated. However, considering the errors of mechanical devices, the distance from the orthographic projection of the indentation onto the first wall to the first edge is set to 3 mm to 5 mm. In this way, it is possible to not only prevent damage to the pressure relief mechanism when providing the indentation in the weak region, but also to further reduce the influence of the insulating film on the actuation of the pressure relief mechanism.

In some embodiments, the indentation includes an annular indentation.

Since the annular indentation has a similar shape to the pressure relief mechanism, when the pressure relief mechanism is actuated, the annular indentation is broken, so that it is possible to quickly reduce the influence on the pressure relief mechanism.

In some embodiments, the indentations include a linear indentation.

The method of providing the linear indentation is simple, facilitating the improvement of the production efficiency of battery cells.

In some embodiments, the length of the linear indentation is greater than or equal to half of a radial dimension of the pressure relief mechanism.

The length of the linear indentation affects the degree of breakage of the insulating film when the pressure relief mechanism is actuated. The greater the length of the linear indentation, the greater the degree of breakage of the insulating film when the pressure relief mechanism is actuated, and the smaller the influence of the insulating film on the pressure relief mechanism. Furthermore, considering the errors of mechanical devices, setting the length of the linear indentation to be greater than or equal to half of the radial dimension of the pressure relief mechanism can further reduce the influence of the insulating film on the actuation of the pressure relief mechanism.

In some embodiments, the linear indentation includes a straight indentation and/or a cross indentation.

Since the arrangement of the straight indentation and the cross indentation is simple and easy to implement, the production efficiency of battery cells can be further improved.

In some embodiments, the indentation is provided on a side of the insulating film facing away from the pressure relief mechanism.

By providing the indentation on the side of the insulating film facing away from the pressure relief mechanism, it is possible to either provide the indentation in the weak region before wrapping around the first wall of the battery cell, or to provide the indentation in the weak region after wrapping around the first wall of the battery cell, thereby increasing the flexibility of providing the insulating film in the weak region.

In some embodiments, the depth of the indentation is 30% or more of the thickness of the entirety of the insulating film except for the indentation.

The depth of the indentation affects the breakage of the insulating film when the pressure relief mechanism is actuated. The greater the depth of the indentation and the smaller the thickness of the insulating film, the easier it is for the insulating film to break. Therefore, in order to further reduce the influence of the insulating film on the actuation of the pressure relief mechanism, the depth of the indentation is set to be 30% or more of the thickness of the entirety of the insulating film except for the indentation.

In some embodiments, the depth of the indentation is 70% to 95% of the thickness of the entirety of the insulating film except for the indentation.

In order to avoid the errors of the mechanical devices, by setting the depth of the indentation to 70% to 95% of the thickness of the entirety of the insulating film except for the indentation, it is possible to reduce the influence of the insulating film on the actuation of the pressure relief mechanism and also to improve the waterproofness of the insulating film.

In some embodiments, the thickness of the weak region is less than the thickness of the entirety of the insulating film except for the weak region.

Since the thickness of the insulating film affects the actuation of the pressure relief mechanism, the thicker the insulating film, the greater the influence on the actuation of the pressure relief mechanism. By setting the thickness of the weak region to be less than the thickness of the entirety of the insulating film except for the weak region, it is possible to further reduce the influence of the insulating film on the actuation of the pressure relief mechanism.

In some embodiments, the insulating film wraps around the first wall of the housing and a second wall of the housing, wherein the second wall is a wall connected to the first wall of the housing.

Since the insulating film wraps around the first wall and the second wall of the housing, it covers all the walls of the housing, thereby improving the insulation of the battery cell.

In a second aspect, the present application provides a battery, including a battery cell of the above embodiments.

In a third aspect, the present application provides an electrical device, including a battery of the above embodiments, the battery being configured to supply electric energy.

In a fourth aspect, the present application provides a method for wrapping around a battery cell with an insulating film, the method including: providing the insulating film with a weak region; and wrapping around the battery cell with the insulating film such that the insulating film wraps around at least a first wall of a housing of the battery cell, wherein the weak region corresponds to a pressure relief mechanism.

### Description of Drawings

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without any creative effort.
Fig. 1 is a schematic structural diagram of a vehicle disclosed in an embodiment of the present application;
Fig. 2 is an exploded schematic structural diagram of a battery disclosed in an embodiment of the present application;
Fig. 3 is an exploded schematic structural diagram of a battery cell disclosed in an embodiment of the present application;
Fig. 4 is a schematic perspective view of another battery cell disclosed in an embodiment of the present application;
Fig. 5 is a schematic side view of another battery cell disclosed in an embodiment of the present application;
Fig. 6 is a schematic diagram of an orthographic projection of an insulating film of a battery cell disclosed in an embodiment of the present application;
Fig. 7 is a schematic cross-sectional view of an insulating film of a battery cell disclosed in an embodiment of the present application;
Fig. 8 is a schematic diagram of an orthographic projection of an insulating film of another battery cell disclosed in an embodiment of the present application;
Fig. 9 is a schematic structural diagram of an annular indentation disclosed in an embodiment of the present application;
Fig. 10 is a schematic diagram of a linear indentation disclosed in an embodiment of the present application;
Fig. 11 is a schematic diagram of another linear indentation disclosed in an embodiment of the present application;
Fig. 12 is a schematic diagram of still another linear indentation disclosed in an embodiment of the present application; and
Fig. 13 is a schematic flowchart of a method for wrapping around a battery cell with an insulating film disclosed in an embodiment of the present application.

In the accompanying drawings, the figures are not necessarily drawn to scale.

### Detailed Description

Embodiments of the present application are described in further detail below in conjunction with the drawings and embodiments. The following detailed description of the embodiments and the drawings are configured to illustrate the principles of the present application by way of example, but should not be configured to limit the scope of the present application, that is, the present application is not limited to the described embodiments.

In the description of the present application, it should be noted that, unless otherwise stated, "plurality of' means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of errors.

Orientation words appearing in the following description are all directions shown in the drawings, and do not limit the specific structure of the present application. In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the battery cell may include a lithium-ion secondary battery, a lithium-ion primary battery, a lithium sulfur battery, a sodium lithium-ion battery, a sodium-ion battery or a magnesium-ion battery and so on, which will not be limited in the embodiments of the present application. The battery cell may be in a cylindrical shape, a flat shape, a cuboid shape or another shape, which is also not limited in the embodiments of the present application. The battery cells are generally classified into three types depending on the way of package: cylindrical battery cells, prismatic battery cells and pouch battery cells, which will also not be limited in the embodiments of the present application.

The battery mentioned in the embodiments of the present application refers to a single physical module including one or more battery cells to provide a higher voltage and capacity. For example, the battery mentioned in the present application may include a battery module or a battery pack, etc. The battery generally includes a box for packaging one or more battery cells. The box can prevent liquid or other foreign matters from affecting charging or discharging of the battery cells.

The battery cell includes an electrode assembly and an electrolytic solution, and the electrode assembly is composed of a positive electrode plate, a negative electrode plate and an separator. The operation of the battery cell mainly relies on the movement of metal ions between the positive electrode plate and the negative electrode plate. The positive electrode plate includes a positive electrode current collector and a positive electrode active material layer. The positive electrode active material layer is coated on a surface of the positive electrode current collector, and the current collector not coated with the positive electrode active material layer protrudes from the current collector coated with the positive electrode active material layer and is used as a positive tab. Taking a lithium-ion battery as an example, the positive electrode current collector may be of a material of aluminum, and the positive electrode active material may be lithium cobalt oxide, lithium iron phosphate, ternary lithium or lithium manganate, etc. The negative electrode plate includes a negative electrode current collector and a negative electrode active material layer. The negative electrode active material layer is coated on a surface of the negative electrode current collector, and the current collector not coated with the negative electrode active material layer protrudes from the current collector coated with the negative electrode active material layer and is used as a negative tab. The material of the negative electrode current collector may be copper, and the negative electrode active material may be carbon or silicon, etc. In order to ensure that no fusing occurs when a large current passes, there are a plurality of positive tabs which are stacked together, and there are a plurality of negative tabs which are stacked together. A material of the separator may be polypropylene (PP) or polyethylene (PE). In addition, the electrode assembly may have a wound structure or a laminated structure, and the embodiments of the present application are not limited thereto.

With the development of the battery technology, it is necessary to consider many design factors, such as energy density, cycle life, discharge capacity, C-rate and other performance parameters. In addition, the safety of the battery should also be considered. For the battery, the main safety hazard comes from the charging and discharging processes. In order to improve the safety performance of the battery, a pressure relief mechanism is generally provided for the battery cell. The pressure relief mechanism refers to an element or component that is actuated to release an internal pressure or heat when the internal pressure or temperature of the battery cell reaches a predetermined threshold. The predetermined threshold may be adjusted according to different design requirements. For example, the predetermined threshold may depend on the material of one or more of the positive electrode plate, the negative electrode plate, the electrolytic solution and the separator in the battery cell. The pressure relief mechanism may take the form of an element or component that is sensitive to pressure or temperature, for example. That is, when the internal pressure or temperature of the battery cell reaches a predetermined threshold, the pressure relief mechanism is actuated, thereby creating a channel through which the internal pressure or heat can be released. Moreover, in order to improve the safety of the battery cell, it is usually necessary to wrap an insulating film on the outer side of the battery cell.

The inventors have noticed that where the insulating film on the outer side of the battery cell wraps around the pressure relief mechanism, when the pressure relief mechanism is actuated, the insulating film will generate pressure on the pressure relief mechanism due to its high toughness, and affect the actuation of the pressure relief mechanism, thereby affecting the safety of the battery. Therefore, the insulating film not only needs to be able to protect the battery cell, but also needs to reduce the influence on the actuation of the pressure relief mechanism.

Based on the above considerations, in order to solve the problem of the insulating film affecting the actuation of the pressure relief mechanism, the inventors have designed a battery cell after in-depth research. An insulating film on the battery cell is provided with a weak region corresponding to the pressure relief mechanism, reducing the toughness of the insulating film in the region corresponding to the pressure relief mechanism, reducing the influence on the actuation of the pressure relief mechanism, and improving the safety of the battery.

The technical solutions described in the embodiments of the present application are applicable to various electrical devices using batteries. The electrical device may be, but not limited to, a vehicle, a mobile phone, a portable device, a laptop, a ship, a spacecraft, an electric toy, an electric tool, and so on. The vehicle may be a fuel vehicle, a gas vehicle or a new energy vehicle. The new energy vehicle may be an all-electric vehicle, a hybrid electric vehicle, an extended-range vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

In the following embodiments, for convenience of description, the electrical device being a vehicle is taken as an example for illustration.

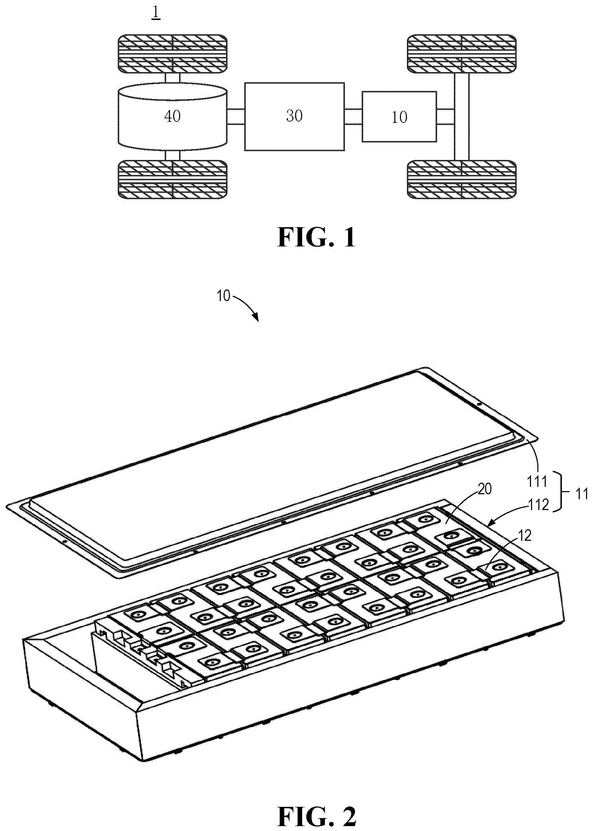

For example, Fig. 1 is a schematic structural diagram of a vehicle 1 according to an embodiment of the present application. The vehicle 1 may be a fuel vehicle, a gas vehicle or a new energy vehicle. The new energy vehicle may be an all-electric vehicle, a hybrid vehicle or an extended-range vehicle, or the like. A motor 40, a controller 30 and a battery 10 may be provided inside the vehicle 1, and the controller 30 is configured to control the battery 10 to supply power to the motor 40. For example, the battery 10 may be arranged at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can be used not only as an operation power supply of the vehicle 1, but also as a driving power supply of the vehicle 1, replacing or partially replacing fuel or natural gas to provide driving power for the vehicle 1.

Fig. 2 shows an exploded view of a battery according to an embodiment of the present application. As shown in Fig. 2, the battery 10 comprises a plurality of battery cells 20 and a bus component 12 for electrically connecting the plurality of battery cells 20. In order to protect the battery cells 20 from being attacked or corroded by an external liquid or a foreign object, the battery 10 comprises a box 11, which is configured to package the plurality of battery cells 20 and other essential components, as shown in Fig. 2. In some embodiments, the box 11 may comprise a cover 111 and a box shell 112. The cover 111 and the box shell 112 may be hermetically assembled together to jointly enclose an accommodating space for accommodating the plurality of battery cells 20.

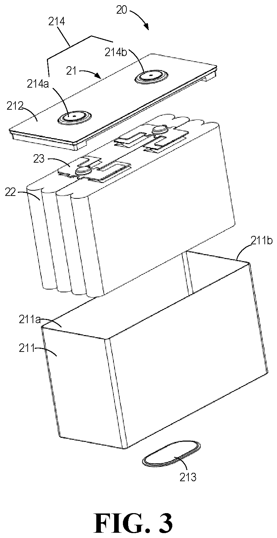

Fig. 3 shows an exploded view of a battery cell 20 according to an embodiment of the present application. As shown in Figs to 3, in the battery cell 20 according to the present application, the battery cell 20 comprises a casing 21, an electrode assembly 22, and an electrolytic solution. The electrode assembly 22 is accommodated in the battery casing 21 of the battery cell 20. The battery casing 21 comprises a housing 211 and an end cover 212. The housing 211 comprises an accommodating cavity 211a formed by a plurality of walls, and an opening 211b. The end cover 212 is arranged at the opening 211b to close the accommodating cavity 211a. In addition to the electrode assembly 22, the electrolytic solution is also accommodated in the accommodating cavity 211a. The positive electrode plate and the negative electrode plate in the electrode assembly 22 are each generally provided with a tab. The tabs generally comprises a positive tab and a negative tab. The tabs are electrically connected to the electrode terminals 214 located outside the battery cell 20 via connecting members 23. The electrode terminals 214 generally comprise a positive electrode terminal 214a and a negative electrode terminal 214b. At least one battery cell 20 of the battery cells 20 in the battery 10 of the present application comprises a pressure relief mechanism 213. In some embodiments, the pressure relief mechanism 213 may be provided on the battery cell 20, that may be more vulnerable to thermal runaway due to its position in the battery 10, among the plurality of battery cells 20. Of course, it is also possible that each battery cell 20 in the battery 10 is provided with a pressure relief mechanism 213.

The pressure relief mechanism 213 is configured, when an internal pressure or temperature of the battery cell 20 reaches a threshold, to be actuated to release the internal pressure or heat. The pressure relief mechanism 213 may have various possible pressure relief structures, which is not limited by the embodiments of the present application. For example, the pressure relief mechanism 213 may be a temperature-sensitive pressure relief mechanism configured to be capable of being melted when the internal temperature of the battery cell 20 provided with the pressure relief mechanism 213 reaches a threshold; and/or the pressure relief mechanism 213 may be a pressure-sensitive pressure relief mechanism configured to be capable of being fractured when an internal gas pressure of the battery cell 20 provided with the pressure relief mechanism 213 reaches a threshold.

The battery cell 20 shown in Fig. 3 is only an example. In actual production, the shape of the battery cell 20 and the position of the pressure relief mechanism 213 may be changed according to different requirements.

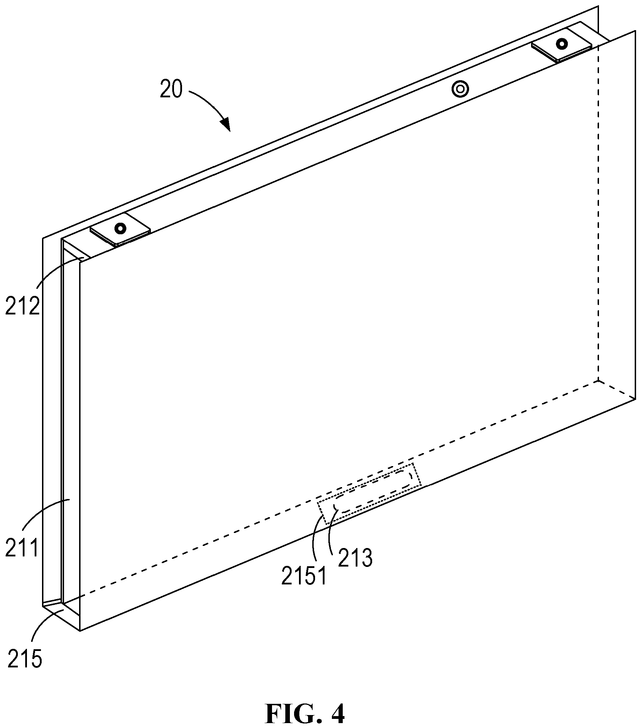

In order to insulate and protect the battery cell, there is an insulating film 215 on the outer side of the battery cell, as shown in Fig. 4. Fig. 4 is a schematic diagram of a battery cell provided in some embodiments of the present application. The battery cell shown in Fig. 4 includes an electrode assembly (not shown), a housing 211, an end cover 212 and an insulating film 215. The housing 211 has an opening (not shown) for accommodating the electrode assembly, and a first wall of the housing 211 is provided with a pressure relief mechanism 213. The end cover 212 is configured to cover the opening, the insulating film 215 wraps around at least the first wall, and the insulating film 215 is provided with a weak region 2151 corresponding to the pressure relief mechanism 213.

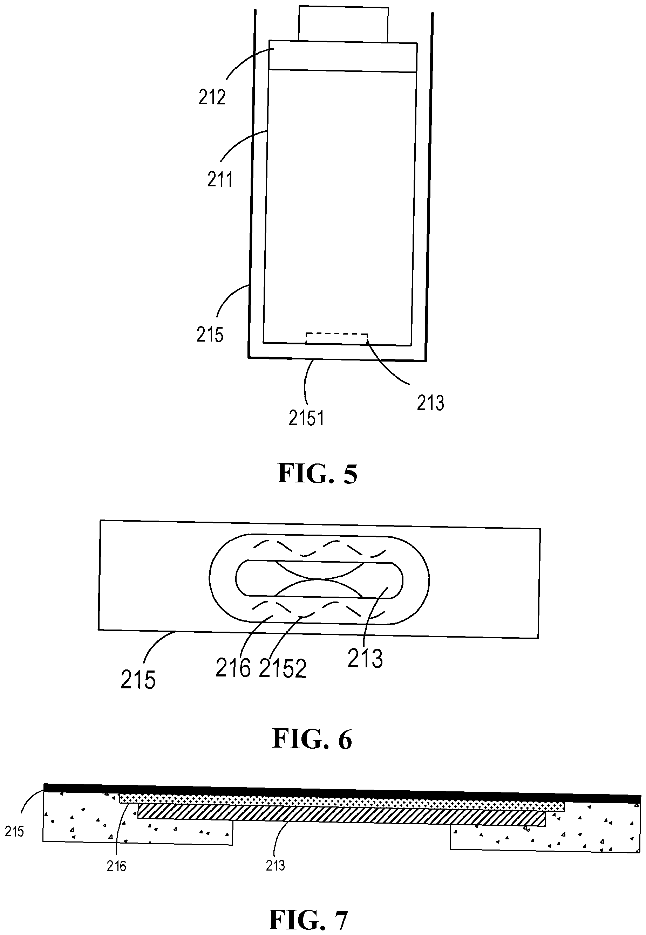

As shown in Figs. 4 and 5, the housing 211 is of a hollow structure with an opening, and is a component configured to accommodate the electrode assembly of the battery cell 20. The pressure relief mechanism 213 is arranged on the first wall of the housing 211. By arranging the pressure relief mechanism 213 on the housing, when the pressure relief mechanism 213 is actuated, emissions 213 can be kept away from a high-voltage region of electrical connection, thereby improving the safety of the battery cell 20. The end cover 212 is configured to cover the opening to isolate the internal environment of the battery cell 20 from the external environment. On this basis, the battery cell 20 provided in the embodiments of the present application further includes an insulating film 215.

The insulating film 215 is provided with a weak region 2151 corresponding to the pressure relief mechanism 213. The insulating film 215 wraps around at least the first wall, for example, may wrap around the housing 211 in a U-shaped wrapping manner. The orthographic projection of the weak region 2151 of the insulating film 215 onto the first wall may partially overlap with the pressure relief mechanism 213, or may completely overlap with the pressure relief mechanism 213. The weak region 2151 of the insulating film 215 may be the insulating film 215 with a lower toughness. For example, the thickness and the material of the weak region 2151 of the insulating film 215 may be controlled.

It should be noted that the pressure relief mechanism 213 of the housing 211 may be provided on any wall (the first wall) of the housing 211, and the housing 211 may alternatively have openings at two ends, which may be configured specifically according to the actual situation.

By providing the insulating film 215 with a weak region 2151 corresponding to the pressure relief mechanism 213 on the housing 211, due to the low toughness of the weak region 2151, the influence of the insulating film 215 on the actuation of the pressure relief mechanism 213 can be reduced, and the safety of the battery cell 20 can be improved.

In some embodiments of the present application, an indentation (not shown) is provided in the weak region 2151.

The weak region 2151 may be provided with one indentation or with a plurality of indentations. The plurality of indentations may be regularly arranged in various combinations. For example, the plurality of indentations may be arranged in parallel, in an S-shaped arrangement (S-shaped indentation), and in a rhombus-shaped arrangement (rhombus-shaped indentation). The plurality of indentations may also be arranged irregularly. The length, number and arrangement of the indentations may be selected according to the actual situation. When a plurality of regularly arranged indentations are provided in the weak region, the plurality of indentations may be called discontinuous indentations, and when one indentation is provided in the weak region, the indentation may be called a continuous indentation.

In practical applications, when the pressure relief mechanism 213 of the battery cell 20 is actuated, the insulating film 215 is subject to a pressure from the pressure relief mechanism 213. At this time, the insulating film 215 will be torn along the indentation, and the pressure inside the battery cell will be released quickly.

By providing the insulating film 215 with an indentation, the toughness of the weak region 2151 can be reduced simply and effectively, thereby reducing the influence of the insulating film 215 on the actuation of the pressure relief mechanism 213, and improving the safety of the battery cell 20.

In some embodiments of the present application, as shown in Figs. 6 and 7, a protective layer 216 is provided on a side of the pressure relief mechanism 213 facing away from the interior of the battery cell (not shown), an orthographic projection of the protective layer 216 onto the first wall (not shown) covers the pressure relief mechanism 213, the insulating film 215 wraps around a side of the protective layer 216 facing away from the pressure relief mechanism 213, and an orthographic projection of the indentation 2152 onto the first wall is covered by the orthographic projection of the protective layer 216 onto the first wall.

The interior of the battery cell may be a part of the battery cell 20 that accommodates the electrode assembly. The side of the pressure relief mechanism 213 facing away from the interior of the battery cell may be the side of the pressure relief mechanism 213 facing away from the electrode assembly (the outer side of the pressure relief mechanism 213). As shown in Figs. 6 and 7, the protective layer 216 wraps around the outer side of the pressure relief mechanism 213 to protect the pressure relief mechanism 213 and reduce the possibility of the pressure relief mechanism 213 being damaged by the outside world when it is not actuated. The insulating film 215 wraps around the side of the protective layer 216 facing away from the pressure relief mechanism 213. The weak region 2151 of the insulating film 215 can correspond to the protective layer 216. The orthographic projection of the indentation 2152 (for example, an S-shaped indentation) of the weak region 2151 onto the first wall may be covered by the orthographic projection of the protective layer 216 onto the first wall.

Since the protective layer 216 can prevent the pressure relief mechanism 213 from being damaged when it is not actuated, when the orthographic projection of the indentation 2152 onto the first wall is covered by the orthographic projection of the protective layer 216 onto the first wall, the influence of the rupture of the insulating film 215 on the battery cell 20 can be reduced when the pressure relief mechanism 213 is not actuated, thereby improving the safety of the battery cell 20.

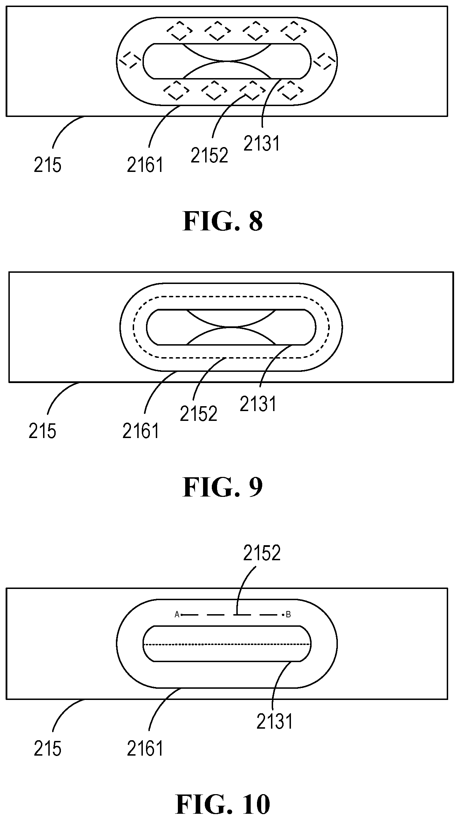

In some embodiments of the present application, as shown in Fig. 8, the orthographic projection of the indentation 2152 onto the first wall is located between a first edge 2131 and a second edge 2161. The first edge 2131 is an edge of the pressure relief mechanism 213; and the second edge 2161 is an edge of the orthographic projection of the protective layer 216 onto the first wall.

It can be understood that there may be a plurality of indentations 2152, and the plurality of indentation 2152 are all provided between the first edge 2131 and the second edge 2161. Alternatively, there may be one indentation 2152, and the whole indentation 2152 is located between the first edge 2131 and the second edge 2161. Specifically, as shown in Fig. 8, the indentations 2152 may be a plurality of rhombus-shaped indentations 2152, and the orthographic projection of each rhombus-shaped indentation 2152 onto the first wall is in an annular region formed by the edge of the pressure relief mechanism 213 and the edge of the orthographic projection of the protective layer 216 onto the first wall.

Since the orthographic projection of the indentation 2152 onto the first wall is located between the first edge 2131 and the second edge 2161, the influence of the rupture of the insulating film on the pressure relief mechanism can be prevented more effectively when the pressure relief mechanism is not actuated, further improving the safety of the battery cell.

Moreover, when the indentation 2152 in the weak region 2151 is provided after the insulating film 215 wraps around the first wall of the housing 211, it is also possible to prevent damage to the pressure relief mechanism 213 when providing the indentation 2152, reduce the loss of battery cells, and reduce the production cost.

In some embodiments of the present application, a distance from the orthographic projection of the indentation 2152 onto the first wall to the first edge 2131 is less than a distance from the orthographic projection of the indentation 2152 onto the first wall to the second edge 2161.

When one indentation 2152 is provided in the weak region 2151, the distance from any point of the orthographic projection of the indentation 2152 onto the first wall to the first edge 2131 is less than the distance from any point to the second edge 2161. When a plurality of indentations 2152 are provided in the weak region 2151, the distance from any point of the orthographic projection of each indentation 2152 onto the first wall to the first edge 2131 is less than the distance 2132 from any point to the second edge.

Since the distance from the orthographic projection of the indentation 2152 onto the first wall to the first edge 2131 is less than the distance from the orthographic projection of the indentation 2152 onto the first wall to the second edge 2161, the indentation 2152 is closer to the pressure relief mechanism 213. Therefore, when the pressure relief mechanism 213 is actuated, the insulating film 215 near the indentation 2152 is broken quickly, so that it is possible to prevent the influence of the rupture of the insulating film 215 on the battery cell 20 when the pressure relief mechanism 213 is not actuated, and further reduce the influence of the insulating film 215 on the actuation of the pressure relief mechanism 213.

In some embodiments of the present application, the distance from the orthographic projection of the indentation 2152 onto the first wall to the first edge 2131 is 3 mm to 5 mm.

When one indentation 2152 is provided in the weak region 2151, the distance from any point of the orthographic projection of the indentation 2152 onto the first wall to the first edge 2131 may be 3 mm to 5 mm. When a plurality of indentations 2152 are provided in the weak region 2151, the distance from any point of the orthographic projection of each indentation 2152 onto the first wall to the first edge 2131 may be 3 mm to 5 mm.

The smaller the distance from the orthographic projection of the indentation 2152 onto the first wall to the first edge 2131, the faster the rupture speed of the insulating film 215 when the pressure relief mechanism 213 is actuated. However, considering the errors of mechanical devices, the distance from the orthographic projection of the indentation 2152 onto the first wall to the first edge 2131 is set to 3 mm to 5 mm. In this way, it is possible to not only prevent damage to the pressure relief mechanism 213 when providing the indentation 2152 in the weak region 2151, but also to further reduce the influence of the insulating film 215 on the actuation of the pressure relief mechanism 213.

In some embodiments of the present application, the indentation 2152 includes an annular indentation 2152.

The annular indentation 2152 may be a plurality of indentations 2152 arranged in a ring, or may be one indentation 2152 in a ring shape. The annular indentation 2152 may be a closed annular indentation or an unclosed annular indentation 2152. For example, as shown in Fig. 9, the orthographic projection of the annular indentation 2152 onto the first wall may surround the pressure relief mechanism 213 in an annular region.

Since the annular indentation 2152 has a similar shape to the pressure relief mechanism 213, when the pressure relief mechanism 213 is actuated, the annular indentation 2152 is broken, so that it is possible to quickly reduce the influence on the pressure relief mechanism 213.

In some embodiments of the present application, the indentation 2152 includes a linear indentation 2152.

The linear indentation 2152 may be a plurality of indentations 2152 arranged in a straight line (discontinuous indentations), or may be one linear indentation 2152 (continuous indentation).

The method of providing the linear indentation 2152 is simple, facilitating the improvement of the production efficiency of battery cells 20.

In some embodiments of the present application, the length of the linear indentation 2152 is greater than or equal to half of a radial dimension of the pressure relief mechanism 213.

When the linear indentation 2152 is a continuous indentation, the length of the linear indentation 2152 may be that of the continuous indentation. As shown in Fig. 10, when the linear indentation 2152 is discontinuous indentations, the length of the linear indentation 2152 is the distance from the point A where the insulating film 215 with a smaller thickness first appears to the point B where the insulating film 215 with a smaller thickness last appears along the direction of the linear indentation 2152. The radial dimension of the pressure relief mechanism 213 is the maximum radial dimension of the pressure relief mechanism 213. For example, when the pressure relief mechanism 213 has a circular shape, the radial dimension of the pressure relief mechanism 213 is the diameter of the pressure relief mechanism 213. When the pressure relief mechanism 213 has an elliptical shape, the radial dimension of the pressure relief mechanism 213 is the size of the long axis of the pressure relief mechanism 213.

The length of the linear indentation 2152 affects the degree of breakage of the insulating film 215 when the pressure relief mechanism 213 is actuated. The greater the length of the linear indentation 2152, the greater the degree of breakage of the insulating film 215 when the pressure relief mechanism 213 is actuated, and the smaller the influence of the insulating film 215 on the pressure relief mechanism 213. Furthermore, considering the errors of mechanical devices, setting the length of the linear indentation 2152 to be greater than or equal to half of the radial dimension of the pressure relief mechanism 213 can further reduce the influence of the insulating film 215 on the actuation of the pressure relief mechanism 213.

In some embodiments of the present application, the linear indentation 2152 includes a straight indentation 2152 and/or a cross indentation 2152.

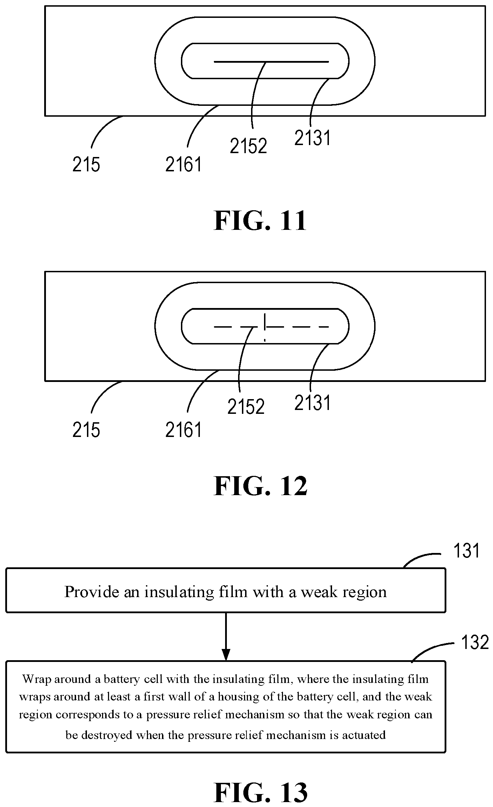

As shown in Figs. 11 and 12, the orthographic projection of the straight indentation 2152 and/or the cross indentation 2152 onto the first wall may be covered by the orthographic projection of the protective layer 216 onto the first wall. The straight indentation 2152 and/or the cross indentation 2152 may each be a continuous indentation, or some may be a continuous indentation.

Since the arrangement of the straight indentation 2152 and the cross indentation 2152 is simple and easy to implement, the production efficiency of battery cells 20 can be further improved.

In some embodiments of the present application, the indentation 2152 is provided on a side of the insulating film 215 facing away from the pressure relief mechanism.

By providing the indentation 2152 on the side of the insulating film 215 facing away from the pressure relief mechanism 213, it is possible to either provide the indentation 2152 in the weak region 2151 before wrapping around the first wall of the battery cell 20, or to provide the indentation 2152 in the weak region 2151 after wrapping around the first wall of the battery cell 20, thereby increasing the flexibility of providing the insulating film 215 in the weak region 2151.

In some embodiments of the present application, the depth of the indentation 2152 is 30% or more of the thickness of the entirety of the insulating film 215 except for the indentation.

The depth of the indentation 2152 affects the breakage of the insulating film 215 when the pressure relief mechanism 213 is actuated. The greater the depth of the indentation 2152 and the smaller the thickness of the insulating film 215, the easier it is for the insulating film 215 to break. Therefore, in order to further reduce the influence of the insulating film 215 on the actuation of the pressure relief mechanism 213, the depth of the indentation 2152 is set to be 30% or more of the thickness of the entirety of the insulating film 215 except for the indentation.

In some embodiments of the present application, the depth of the indentation 2152 is 70% to 95% of the thickness of the entirety of the insulating film 215 except for the indentation.

In order to avoid the errors of the mechanical devices, by setting the depth of the indentation 2152 to 70% to 95% of the thickness of the entirety of the insulating film 215 except for the indentation, it is possible to reduce the influence of the insulating film 215 on the actuation of the pressure relief mechanism 213 and also to improve the waterproofness of the insulating film 215.

In some embodiments of the present application, the thickness of the weak region 2151 is less than the thickness of the entirety of the insulating film 215 except for the weak region.

Since the thickness of the insulating film 215 affects the actuation of the pressure relief mechanism 213, the thicker the insulating film 215, the greater the influence on the actuation of the pressure relief mechanism 213. By setting the thickness of the weak region 2151 to be less than the thickness of the entirety of the insulating film 215 except for the weak region 2151, it is possible to further reduce the influence of the insulating film 215 on the actuation of the pressure relief mechanism 213.

In some embodiments of the present application, the insulating film 215 wraps around the first wall of the housing 211 and a second wall of the housing 211. The second wall is a wall connected to the first wall of the housing.

The insulating film 215 may wrap around the first wall of the housing 211 and the second wall of the housing 211 in an annular wrapping manner.

Since the insulating film 215 wraps around the first wall and the second wall of the housing 211, it covers all the walls of the housing 211, thereby improving the insulation of the battery cell 20.

For ease of understanding and description, the embodiments of the present application only take a cuboid battery cell 20 as an example. It should be understood that the embodiments of the present application are also applicable to battery cells 20 of other shapes.

According to some embodiments of the present application, the present application further provides a battery, including a battery cell of any one of the above embodiments.

According to some embodiments of the present application, the present application further provides an electrical device, including a battery of the above embodiments, the battery being configured to supply electric energy to the electrical device.

The battery cell, the battery and the electrical apparatus provided in the embodiments of the present application are described above, and a method for wrapping around a battery cell with an insulating film provided in the embodiments of the present application will be described below with reference to Fig. 13. For the parts not described in detail, reference may be made to the foregoing embodiments.

Fig. 13 is a schematic flowchart of a method for wrapping around a battery cell with an insulating film provided in some embodiments of the present application. As shown in Fig. 13, the method may comprise the following steps.

In step 131, an insulating film 215 is provided with a weak region 2151.

In step 132, a battery cell 20 is wrapped with the insulating film 215. The insulating film 215 wraps around at least a first wall of a housing 211 of the battery cell 20, and the weak region 2151 corresponds to a pressure relief mechanism 213 so that the weak region can be destroyed 213 when the pressure relief mechanism is actuated.

It should be noted that it is possible that the weak region 2151 is provided before the insulating film 215 wraps around the battery cell 20, and the insulating film 215 with the weak region 2151 wraps around the battery cell 20; or that after the insulating film 215 wraps around the battery cell 20, a region of the insulating film 215 corresponding to the pressure relief mechanism 213 is configured as a weak region 2151.

In some embodiments of the present application, an indentation 2152 is provided in the weak region 2151.

For example, the indentation 2152 may be provided in the weak region 2151 by laser.

In some embodiments of the present application, a protective layer 216 is provided on a side of the pressure relief mechanism 213 facing away from the interior of the battery cell, an orthographic projection of the protective layer 216 onto the first wall covers the pressure relief mechanism 213, the insulating film 215 wraps around a side of the protective layer 216 facing away from the pressure relief mechanism 213, and an orthographic projection of the indentation 2152 onto the first wall is covered by the orthographic projection of the protective layer 216 onto the first wall.

For example, it is possible that an indentation 2152 is provided on the insulating film 215, and according to the position information of the protective layer 216 of the battery cell 20, the indentation on the insulating film 215 corresponds to the protective layer 216; or that after the insulating film 215 wraps around the battery cell 20, according to the position information of the protective layer 216 of the battery cell 20, an indentation 2152 is provided in a region of the insulating film 215 corresponding to the protective layer 216.

In some embodiments of the present application, the orthographic projection of the indentation 2152 onto the first wall is located between a first edge 2131 and a second edge 2161. The first edge 2131 is an edge of the pressure relief mechanism 213; and the second edge 2161 is an edge of the orthographic projection of the protective layer 216 onto the first wall.

In some embodiments of the present application, a distance from the orthographic projection of the indentation 2152 onto the first wall to the first edge 2131 is less than a distance from the orthographic projection of the indentation 2152 onto the first wall to the second edge 2161.

In some embodiments of the present application, the distance from the orthographic projection of the indentation 2152 onto the first wall to the first edge 2131 is 3 mm to 5 mm.

In some embodiments of the present application, the indentation 2152 includes an annular indentation 2152.

In some embodiments of the present application, the indentation 2152 includes a linear indentation 2152.

In some embodiments of the present application, the length of the linear indentation 2152 is greater than or equal to half of a radial dimension of the pressure relief mechanism 213.

In some embodiments of the present application, the linear indentation 2152 includes a straight indentation 2152 and/or a cross indentation 2152.

In some embodiments of the present application, the indentation 2152 is provided on a side of the insulating film 215 facing away from the pressure relief mechanism 213.

In some embodiments of the present application, the depth of the indentation 2152 is 30% or more of the thickness of the entirety of the insulating film 215 except for the indentation.

In some embodiments of the present application, the depth of the indentation 2152 is 70% to 95% of the thickness of the entirety of the insulating film 215 except for the indentation.

In some embodiments of the present application, the thickness of the weak region 2151 is less than the thickness of the entirety of the insulating film 215 except for the weak region 2151.

In some embodiments of the present application, the insulating film 215 wraps around the first wall of the housing 211 and a second wall of the housing 211. The second wall is a wall connected to the first wall of the housing 211.

Optionally, in an embodiment of the present application, a method for wrapping around a battery cell with an insulating film may include the following steps.

The insulating film 215 is provided with an indentation.

For example, as shown in Figs. 8 and 10, the insulating film is provided with an annular indentation 2152 or a straight indentation 2152. The sum of the lengths of the indentation in the annular indentation 2152 is 40% or more of the length of the annular indentation 2152, and the length of the straight indentation 2152 is half or more of the radial dimension of the pressure relief mechanism. The depth of the annular indentation 2152 or the straight indentation 2152 is 70% of the thickness of the entirety of the insulating film except for the indentation.

The insulating film 215 wraps around the first wall (provided with the pressure relief mechanism) of the housing 211 of the battery cell 20, so that the weak region 2151 with the indentation 211 overlaps with the protective layer 216. The protective layer 216 wraps around the side of the pressure relief mechanism 213 facing away from the inside of the battery cell.

Optionally, in another embodiment of the present application, a method for wrapping around a battery cell with an insulating film may include the following steps.

The insulating film 215 wraps around at least a first wall of a housing 211 of the battery cell 20. The first wall of the housing 211 is provided with a pressure relief mechanism 213. A protective layer 216 is provided on a side of the pressure relief mechanism 213 facing away from the interior of the battery cell 20. The orthographic projection of the protective layer 216 onto the first wall covers the pressure relief mechanism 213.

An indentation 2152 is provided in a region of the insulating film 215 corresponding to the pressure relief mechanism 213, such that the orthographic projection of the indentation 2152 onto the first wall of the housing 211 is located between a first edge and a second edge.

The form of the indentation 2152 may be similar to the indentation 2152 in the above embodiments, and will not be described again here.

Therefore, by providing the indentation 2152 in a position corresponding to the pressure relief mechanism 213, it is possible that the influence of the insulating film 215 on the pressure relief mechanism 213 is small when the pressure relief mechanism 213 is actuated while ensuring the insulation performance of the insulating film 215, thereby improving the safety performance of the battery cell 20.

While the present application has been described with reference to the preferred embodiments, various modifications may be made and components therein may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery cell, comprising:
an electrode assembly;
a housing having an opening configured to accommodate the electrode assembly, wherein a first wall of the housing is provided with a pressure relief mechanism;
an end cover configured to cover the opening; and
an insulating film for wrapping around at least the first wall;
wherein the insulating film is provided with a weak region corresponding to the pressure relief mechanism.

2. The battery cell according to claim 1, wherein an indentation is provided in the weak region.

3. The battery cell according to claim 2, wherein a protective layer is provided on a side of the pressure relief mechanism facing away from the interior of the battery cell, an orthographic projection of the protective layer onto the first wall covers the pressure relief mechanism, the insulating film wraps around a side of the protective layer facing away from the pressure relief mechanism, and an orthographic projection of the indentation onto the first wall is covered by the orthographic projection of the protective layer onto the first wall.

4. The battery cell according to claim 3, wherein the orthographic projection of the indentation onto the first wall is located between a first edge and a second edge, wherein the first edge is an edge of the pressure relief mechanism; and the second edge is an edge of the orthographic projection of the protective layer on the first wall.

5. The battery cell according to claim 4, wherein a distance from the orthographic projection of the indentation onto the first wall to the first edge is less than a distance from the orthographic projection of the indentation onto the first wall to the second edge.

6. The battery cell according to claim 5, wherein the distance from the orthographic projection of the indentation onto the first wall to the first edge is 3 mm to 5 mm.

7. The battery cell according to any one of claims 2 to 6, wherein the indentation is an annular indentation.

8. The battery cell according to any one of claims 2 to 7, wherein the indentation is a linear indentation.

9. The battery cell according to claim 8, wherein the length of the linear indentation is greater than or equal to half of a radial dimension of the pressure relief mechanism.

10. The battery cell according to claim 8 or 9, wherein the linear indentation comprises a straight indentation and/or a cross indentation.

11. The battery cell according to any one of claims 2 to 10, wherein the indentation is provided on a side of the insulating film facing away from the pressure relief mechanism.

12. The battery cell according to any one of claims 2 to 11, wherein the depth of the indentation is 30% or more of the thickness of the entirety of the insulating film except for the indentation.

13. The battery cell according to claim 12, wherein the depth of the indentation is 70% to 95% of the thickness of the entirety of the insulating film except for the indentation.

14. The battery cell according to any one of claims 1 to 13, wherein the thickness of the weak region is less than the thickness of the entirety of the insulating film except for the weak region.

15. The battery cell according to any one of claims 1 to 13, wherein the insulating film wraps around the first wall of the housing and a second wall of the housing, wherein the second wall is a wall connected to the first wall of the housing.

16. A battery, comprising a battery cell of any one of claims 1 to 15.

17. An electrical device, comprising a battery of claim 16, the battery being configured to supply electric energy.

18. A method for wrapping around a battery cell with an insulating film, the method comprising:
providing the insulating film with a weak region; and
wrapping around the battery cell with the insulating film such that the insulating film wraps around at least a first wall of a housing of the battery cell,
wherein the weak region corresponds to a pressure relief mechanism.
